(19) Europäisches Patentamt
European Patent Office
Office européen des brevets

(11) **EP 2 357 798 B1**

(12) **FASCICULE DE BREVET EUROPEEN**

(45) Date de publication et mention
de la délivrance du brevet:
**02.01.2013 Bulletin 2013/01**

(51) Int Cl.:
***H04N 5/355*** *(2011.01)*

(21) Numéro de dépôt: **10192645.9**

(22) Date de dépôt: **25.11.2010**

(54) **Procédé et circuit de commande d'un capteur d'image à gamme dynamique étendue**

Verfahren und Vorrichtung zur Ansteuerung eines Bildsensors mit hohem Dynamikumfang

Method and circuit for driving a high dynamic range image sensor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2009 FR 0959034**

(43) Date de publication de la demande:
**17.08.2011 Bulletin 2011/33**

(73) Titulaire: **STMicroelectronics (Grenoble 2) SAS
38000 Grenoble (FR)**

(72) Inventeur: **Varillon, Paul
38100 Grenoble (FR)**

(74) Mandataire: **de Beaumont, Michel
1bis, rue Champollion
38000 Grenoble (FR)**

(56) Documents cités:
**EP-A2- 1 971 137          WO-A1-2004/064386
WO-A1-2007/074659      FR-A- 2 915 652
US-B1- 7 202 892**

**Description**

Domaine de l'invention

La présente invention concerne de façon générale les capteurs d'images dynamiques utilisés dans des dispositifs d'acquisition d'images numériques tels que des caméras et des appareils photos.
L'invention concerne de tels dispositifs d'acquisition d'images, que ceux-ci soient autonomes ou fassent partie d'un dispositif comportant d'autres fonctions tel que, par exemple, un téléphone portable ou un véhicule automobile.

Exposé de l'art antérieur

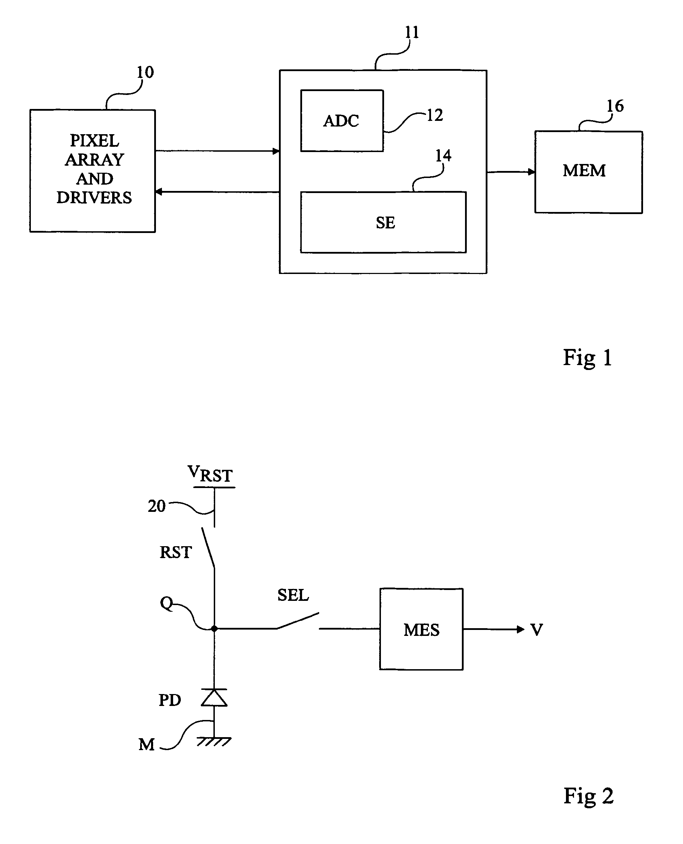

La figure 1 représente de façon très schématique et sous forme de blocs, un exemple de dispositif d'acquisition d'images du type auquel s'applique la présente invention. Ce dispositif comporte un capteur d'image composé de cellules à photodiode et ses systèmes de commande 10 (PIXEL ARRAY AND DRIVERS) fournissant les niveaux représentatifs de l'éclairement des différentes photodiodes. Le dispositif d'acquisition d'images comporte également un module de commande 11 du capteur 10 composé, entre autres, d'un convertisseur de signaux analogiques-numériques 12 (ADC) et d'un circuit électronique de commande et traitement 14 (SE). Les niveaux d'éclairements sont ensuite exploités par un système de mémorisation 16 (MEM).
La figure 2 représente un exemple de schéma électrique équivalent d'une cellule à photodiode d'un capteur d'image. La cellule comporte une photodiode PD utilisée en inverse et dont la capacité de jonction est déchargée par le photocourant en fonction de l'intensité lumineuse reçue. L'anode de la photodiode PD est connectée à un potentiel de référence (par exemple la masse M) et sa cathode est reliée à un point Q définissant un point de lecture de la cellule. Le point Q est relié, par un interrupteur RST, à une borne 20 de fourniture d'un potentiel $V_{RST}$, positif par rapport au potentiel de référence M. Ce potentiel $V_{RST}$ permet de réinitialiser la cellule (pré-charger la capacité de jonction de la photodiode) entre deux acquisitions successives d'images. Le point Q est par ailleurs relié par un interrupteur SEL à un dispositif MES de mesure de la tension de décharge de la photodiode PD. La sortie du dispositif de mesure est reliée à une borne V qui fournit une tension transmise au bloc 12.
Dans un capteur simple dit statique, l'acquisition est réalisée pendant une période d'intégration fixe. Si l'intensité lumineuse décharge entièrement une photodiode avant la fin de la période d'intégration, la cellule est saturée. Le capteur n'est plus en mesure de distinguer entre les niveaux, ou plages de luminosité des cellules les plus élevés.
Dans un capteur dit haute dynamique, on cherche à éviter cette saturation en découpant la période d'intégration en intervalles de temps entre lesquels le point de lecture Q est rechargé.

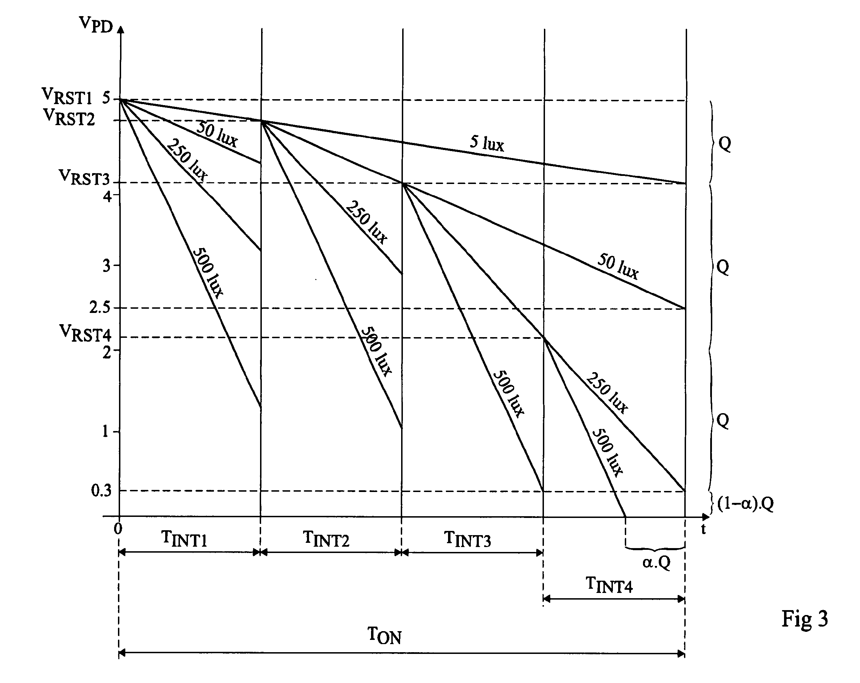

La figure 3 illustre, par un chronogramme, le fonctionnement d'un capteur dynamique d'image. Ce chronogramme représente quatre allures de la tension V issue d'une photodiode pour quatre luminosités différentes au cours d'une période d'intégration $T_{ON}$.
Ce chronogramme montre que pour un éclairement de 5 lux le niveau final lu à la fin des périodes d'intégration n'est pas affecté par les réinitialisations successives. Le niveau de 50 lux est affecté par la première réinitialisation, mais pas par les deux suivantes. Le niveau de 250 lux est affecté par les premières et deuxièmes réinitialisations, mais pas par la troisième. Le niveau de 500 lux est affecté pour toutes les réinitialisations. Pour ce niveau de luminosité élevé, la cellule sature malgré les réinitialisations opérées.
Dans cet exemple, la période d'intégration est découpée en 4 intervalles $T_{INT1}$, $T_{INT2}$, $T_{INT3}$, et $T_{INT4}$ entre lesquelles le capteur est réinitialisé à des niveaux de tension successifs décroissants $V_{RST1}$, $V_{RST2}$, $V_{RST3}$ et $V_{RST4}$.
Au début de la période $T_{INT1}$, toutes les photodiodes sont préchargées à la tension $V_{RST1}$. Les photodiodes se déchargent ensuite pendant l'intégralité de la période $T_{INT1}$. Cette première période évite la saturation, mais cette saturation serait atteinte pour la période $T_{ON}$ pour certains niveaux de luminosité.
Au début des périodes $T_{INT2}$ et $T_{INT3}$ les photodiodes sont préchargées à la tension $V_{RST2}$, respectivement $V_{RST3}$. Comme pour la première période, la saturation est évitée. La dernière période $T_{INT4}$ n'évite pas la saturation de niveaux les plus élevés. Mais des photodiodes exposées à une forte luminosité, par exemple 500 lux, sont saturées et les informations sur la répartition des niveaux des photodiodes saturées sont perdues.
Dans un capteur dynamique usuel, on adapte le nombre de périodes d'intégration pour éviter ce phénomène de saturation. A l'inverse, si l'image devient moins lumineuse, on diminue le nombre d'intervalles pour améliorer le contraste des images sombres.
Idéalement, une distribution homogène des cellules dans toute l'excursion du signal fourni par le capteur (niveaux de tension ou valeurs numérisées) garantit un bon contraste. En pratique, une telle distribution n'est pas atteinte dans un capteur dynamique usuel. Ce phénomène est illustré par la partie droite de la figure 3 qui représente la distribution des cellules par niveaux de luminosité en supposant un capteur de 4xQ cellules. On remarque que les quantités Q ne sont pas distribuées régulièrement au regard des niveaux de luminosité. La quantité $\alpha$xQ représente le nombre de cellules saturées.

Des exemples connus de capteurs d'images et leur fonctionnement sont décrits dans les brevets US-A-6600471, US-A-6348681, EP-A-1971137, WO-A-2007/074659, FR-A-2915652 et WO-A-2004/064386.

Résumé de l'invention

Un objet d'un mode de réalisation de la présente invention est de proposer un capteur d'image palliant tout ou partie des inconvénients des capteurs usuels.
Un autre objet d'un mode de réalisation de la présente invention est de proposer un procédé de commande d'un capteur qui améliore la qualité et le contraste des images.
Pour atteindre tout ou partie de ces objets ainsi que d'autres, un mode de réalisation de la présente invention prévoit un procédé de commande d'un capteur dynamique d'image définissant, pour chaque image, plusieurs intervalles de temps successifs d'exposition de cellules à photodiode en partant de niveaux de réinitialisation successifs décroissants, dans lequel les intervalles de temps d'exposition de l'image respectent une distribution homogène de la quantité de cellules par plages de niveaux de luminosité.
Selon un mode de réalisation de la présente invention, les intervalles de temps d'exposition d'une image courante sont utilisés pour déterminer ceux d'une image suivante.
Selon un mode de réalisation de la présente invention, les intervalles de temps d'exposition de l'image suivante sont calculés à partir des niveaux de luminosité de l'image courante et de la répartition souhaitée des cellules pour l'image suivante.
Selon un mode de réalisation de la présente invention, les intervalles de temps $T_{(i)}$ entre les réinitialisations pour l'image suivante sont calculés à l'aide de la formule :

$$T_{(i)} = \frac{PvalN + 1_{(i)} - PvalN + 1_{(i-1)}}{Sen \cdot \left( LvalN + 1_{(i)} - LvalN + 1_{(i-1)} \right)} \, ,$$

où

$PvalN+1_{(i)}$ désigne le seuil supérieur de l'intervalle i pour l'image suivante,
$PvalN+1_{(i-1)}$ désigne le seuil supérieur de l'intervalle i-1 pour l'image suivante,
$LvalN+1_{(i)}$ désigne la valeur de luminosité de l'intervalle i pour l'image suivante,
$LvalN+1_{(i-1)}$ désigne la valeur de luminosité de l'intervalle i-1 pour l'image suivante, et
Sen désigne la sensibilité d'une cellule.

Selon un mode de réalisation de la présente invention, les niveaux de réinitialisation des cellules sont calculés à partir des seuils supérieurs des intervalles de luminosité, des intervalles de temps, des valeurs de luminosité, et de la sensibilité d'une cellule.
Selon un mode de réalisation de la présente invention, les niveaux $Prst_{(i)}$ des réinitialisations successives pour l'image suivante sont calculés à l'aide de la formule :

$$Prst_{(i)} = PvalN + 1_{(i)} - \left( T_{(i)} \cdot Sen \cdot LvalN + 1_{(i)} \right) \, ,$$

où

$T_{(i)}$ désigne l'intervalle de temps d'exposition de rang i entre les réinitialisations pour l'image courante.

Selon un mode de réalisation de la présente invention, une étape de vérification assure que les niveaux de réinitialisation successifs sont décroissants.
Selon un mode de réalisation de la présente invention, une valeur maximum de luminosité des cellules de l'image courante est, de manière optionnelle, comparée à un seuil et ajustée, pour l'image suivante, pour assurer la répartition des cellules sur toute la plage de valeurs disponibles.
On prévoit également un circuit de commande d'un capteur d'image adapté à la mise en oeuvre du procédé.
On prévoit également un capteur d'image comportant un circuit de commande d'un capteur d'image adapté à la mise en oeuvre du procédé.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 décrite précédemment représente, de façon très schématique et sous forme de blocs, un exemple de dispositif d'acquisition d'image du type auquel s'applique la présente invention ;
la figure 2 décrite précédemment représente un premier exemple classique de cellule d'un capteur d'image ;
la figure 3 décrite précédemment est un chronogramme illustrant le fonctionnement d'une cellule d'un capteur dynamique et le phénomène de saturation d'une cellule ;
la figure 4 illustre les répartitions des valeurs de cellules pour l'image courante et la répartition souhaitée des valeurs de cellules pour l'image suivante ; et
la figure 5 illustre, sous forme de chronogramme, le fonctionnement d'une cellule de capteur d'image selon un mode de mise en oeuvre de la présente invention.

Description détaillée

De même éléments ont été désignés par des mêmes références aux différentes figures qui ont été tracées sans respect d'échelle. Pour des raisons de clarté, seuls les étapes et les éléments utiles à la compréhension de l'invention ont été représentés et seront décrits. En particulier, la génération des signaux de commande d'un capteur d'image n'a pas été détaillée, la mise en oeuvre de l'invention étant compatible avec les systèmes de synchronisation classiques générant des signaux temporels de synchronisation. La destination des signaux issus du capteur d'image n'a pas non plus été détaillée, l'invention étant là encore compatible avec toute exploitation classique de tels signaux.
L'invention sera décrite en relation avec un mode de réalisation appliqué à des cellules monochromes à photodiode. L'invention et les schémas sont toutefois applicables au traitement d'informations fournies par un dispositif d'acquisition couleur.
Pour une meilleure compréhension, l'image courante est identifiée image N, l'image suivante est identifiée image N+1.

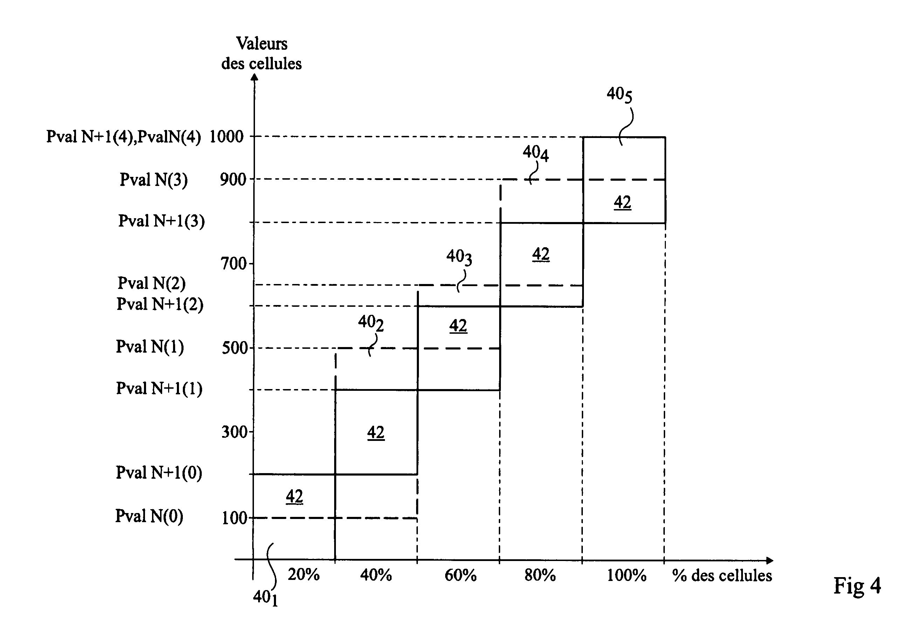

La figure 4 représente l'analyse effectuée par le circuit électronique de commande et de traitement 14 (figure 1) d'une image N pour préparer la prise de l'image N+1 selon un mode de réalisation du procédé de commande.

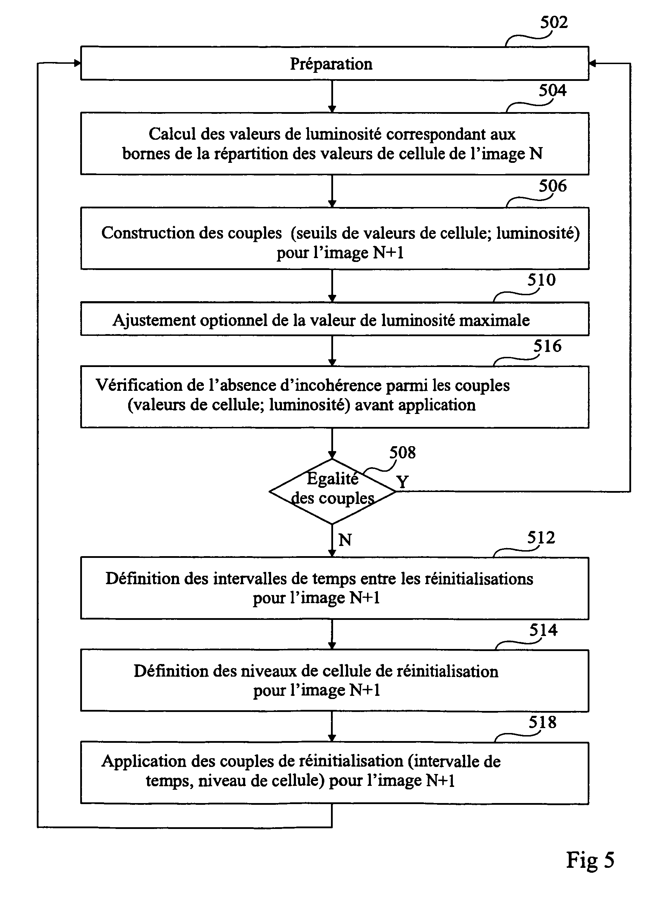

La figure 5 représente un exemple d'organigramme décrivant un mode de réalisation d'enchainement des séquences exécutées par le circuit 14.
Les séquences de la figure 5 sont précédées d'une séquence d'initialisation du circuit électronique de commande et de traitement 14 au cours de laquelle au moins les grandeurs intrinsèques suivantes sont mémorisées:

-   une information représentative de la sensibilité d'une cellule, par exemple arbitrairement :

**Sen = 1000 CV/lux.s,** où CV désigne la valeur de la cellule traduisant la lumière reçue par la photodiode ;

-   le nombre d'intervalles avec lequel on souhaite fractionner l'intégralité de l'excursion des valeurs de cellules (par exemple cinq intervalles) ; et
-   optionnellement, le seuil de saturation du capteur.

L'analyse débute par une séquence de préparation 502 au cours de laquelle les grandeurs suivantes nécessaires aux calculs futurs sont calculées et mémorisées :

-   la valeur maximum (1000) fournie par les cellules de l'image N ;
-   la répartition du nombre de cellules dans l'image N. Dans l'exemple de la figure 4, les cellules sont réparties inégalement dans 5 intervalles, ou plages de niveau, 40 ($40_1$, $40_2$, $40_3$, $40_4$, $40_5$) représentés en pointillés avec des seuils supérieurs $PvalN_{(i)}$, i désignant le rang de l'intervalle dans l'image (dans cet exemple $0 \leq i \leq 4$) :

$PvalN_{(0)}$ = 100 ;
$PvalN_{(1)}$ = 500 ;
$PvalN_{(2)}$ = 650 ;
$PvalN_{(3)}$ = 900 ;
et
$PvalN_{(4)}$ = 1000.

- les valeurs de luminosité $LvalN_{(i)}$ correspondant aux seuils des intervalles de répartition dans l'image N, par exemple :

$LvalN_{(0)}$ = 10 ;
$LvalN_{(1)}$ = 30 ;
$LvalN_{(2)}$ = 80 ;
$LvalN_{(3)}$ = 200 ;
et
$LvalN_{(4)}$ = 500.

- la répartition souhaitée pour les valeurs de cellules de l'image N+1 en divisant la valeur maximum de luminosité de l'image N par le nombre d'intervalles, pour obtenir les seuils supérieurs $PvalN+1_{(i)}$ des intervalles pour l'image N+1.

Dans l'exemple de la figure 4, il s'agit de répartir les valeurs de cellules dans cinq intervalles 42 rassemblant chacun 20% des valeurs de cellules :

$PvalN+1_{(0)}$ = 200 ;
$PvalN+1_{(1)}$ = 400 ;
$PvalN+1_{(2)}$ = 600 ;
$PvalN+1_{(3)}$ = 800 ;
et
$PvalN+1_{(4)}$ = 1000.

Le cas échéant, le nombre d'intervalles est adapté d'une image à l'autre en redistribuant les valeurs sur le nombre d'intervalles visé.
Puis, on exécute une première séquence de calcul 504 dans laquelle on détermine les valeurs de luminosité correspondant aux bornes de la répartition des valeurs de cellules de l'image N pour chaque intervalle.
A partir des données de l'image N, on calcule les valeurs de luminosité $LvalN+1_{(i)}$ correspondant à chaque seuil des intervalles de valeurs à l'aide de la formule ci-dessous :

$$LvalN + 1_{(i)} = LvalN_{(i)} + \left( \frac{LvalN_{(i+1)} - LvalN_{(i)}}{PvalN + 1_{(i+1)} - PvalN + 1_{(i)}} \right) * (PvalN_{(i)} - PvalN + 1_{(i)}) ,$$

dans
laquelle Lval désigne les valeurs de luminosité.
Pour l'application de la formule ci-dessus, on notera que $PvalN+1_{(0)}$ = $LvalN_{(0)}$ = 0, indépendamment des valeurs obtenues précédemment.
Dans l'exemple de la figure 4, on obtient :

$LvalN+1_{(0)}$ = 5 ;
$LvalN+1_{(1)}$ = 55 ;
$LvalN+1_{(2)}$ = 110 ;
$LvalN+1_{(3)}$ = 350 ;
et
$LvalN+1_{(4)}$ = 500.

Une deuxième séquence de calcul 506 associe les valeurs déterminées dans la première séquence par couples (seuils de valeurs de cellules ; luminosité) pour l'image N+1, ou encore ($LvalN+1_{(i)}$ ; $PvalN+1_{(i)}$).
Dans l'exemple de la figure 4, on obtient :

i=0 : (200 ; 5) ;
i=1 : (400 ; 55) ;
i=2 : (600 ; 110) ;
i=3 : (800 ; 350) ;
et

i=4 : (1000 ; 500).

De façon optionnelle, on adapte le niveau de luminosité maximum avant de déterminer les intervalles de temps et les niveaux de réinitialisation. Pour cela, une troisième séquence de calcul 510 ajuste la valeur de la luminosité maximale pour profiter de toute l'excursion des niveaux de luminosité disponible. Le calcul du nombre de cellules de l'image N saturées est effectué, puis comparé à un seuil de saturation fixé pour le capteur.
Si le nombre calculé est supérieur au seuil de saturation, l'image N est dite surexposée. La valeur attribuée à la luminosité maximale de l'image N+1 est alors réduite d'une valeur appropriée.
Si le nombre calculé est inférieur au seuil de saturation, l'image N est dite sous-exposée. La valeur attribuée à la luminosité maximale pour l'image N+1 est alors augmentée jusqu'à la valeur de luminosité la plus élevée de l'image N.
Une quatrième séquence de calcul 516 vérifie l'absence d'incohérence avant application des couples (valeurs de cellules ; luminosité) sur l'image N+1. Pour cela, on calcule la pente $a_i$ des segments respectifs définis par les couples $(LvalN+1_{(last\_valid\_point)} ; PvalN+1_{(last\_valid\_point)})$ et $(LvalN+1_{(i)} ; PvalN+1_{(i)})$, où last_valid_point désigne le dernier point validé. Pour i = 0, $LvalN+1_{(last\_valid\_point)} = 0$ et $PvalN+1_{(last\_valid\_point)} = 0$.
On compare cette valeur avec les pentes $\alpha_n$ des segments définis par les couples $(LvalN+1_{(last\_valid\_point)} ; PvalN+1_{(last\_valid\_point)})$ et $(LvalN+1_{(n)} ; PvalN+1_{(n)})$, où n est compris entre i+1 et "nombre d'intervalles" - 1 (ici 4). Si une pente $\alpha(i)_n$ est supérieure à la pente $a_{(i)}$ du segment, alors le couple $(LvalN+1_{(i)} ; PvalN+1_{(i)})$ n'est pas pris en compte pour l'application des valeurs au capteur. Si au contraire $a_{(i)}$ est supérieure à toutes les valeurs $\alpha(i)_n$ alors le point est valide et on définit last_valid_point = i.
La pente de chaque segment est calculée de la façon suivante :

$$a_{(i)} = \frac{LvalN+1_{(i)} - LvalN+1_{(last\_valid\_point)}}{PvalN+1_{(i)} - PvalN+1_{(last\_valid\_point)}} ,$$

en prenant $LvalN+1_{(-1)} = PvalN+1_{(-1)} = 0$.
Avec les valeurs prises dans l'exemple ci-dessus, les pentes des segments sont décroissantes et tous les couples sont conservés :

$a_{(0)}$ = 40,00 et $\alpha(0)_1$ = 7,27 ; $\alpha(0)_2$ = 5,45 ; $\alpha(0)_3$ = 2,29 ; $\alpha(0)_4$ = 2,00 : Le point est valide.
$a_{(1)}$ = 4 et $\alpha(1)_2$ = 3,81 ; $\alpha(1)_3$ = 1,74 ; $\alpha(1)_4$ = 1,35 : Le point est valide.
$a_{(2)}$ = 3,63 et $\alpha(2)_3$ = 1,36 ; $\alpha(2)_4$ = 1,35 : Le point est valide.
$a_{(3)}$ = 0,83 et $\alpha(3)_4$ = 1,03 : Le point n'est pas valide.
$a_{(4)}$ = 1,03.

On supprime donc le couple correspondant à i = 3 et, dans l'exemple de la figure 4, on obtient :

i=0 : (200 ; 5) ;
i=1 : (400 ; 55) ;
i=2 : (600 ; 110) ;
et
i=3 : (1000 ; 500).

Si les couples obtenus pour l'image N+1 sont identiques aux couples de l'image N, ces nouveaux couples ne sont pas appliqués, comme illustré en 508. On retourne alors directement à la séquence de préparation 502. Sinon, on passe à la séquence suivante.
Une cinquième séquence de calcul 512 définit les intervalles de temps $T_{(i)}$ d'exposition entre les réinitialisations pour l'image N+1 à l'aide de la formule :

$$T_{(i)} = \frac{PvalN+1_{(i)} - PvalN+1_{(i-1)}}{Sen \cdot (LvalN+1_{(i)} - LvalN+1_{(i-1)})}.$$

En reprenant l'exemple précédent, on obtient :

$T_{(0)}$ = 40 ms ;

$T_{(1)}$ = 4 ms ;
$T_{(2)}$ = 3,64 ms ; et
$T_{(3)}$ = 1,03 ms.

Une sixième séquence de calcul 514 définit les niveaux $Prst_{(i)}$ des réinitialisations successives pour l'image N+1 avec la formule :

$$Prst_{(i)} = PvalN + 1_{(i)} - \left( T_{(i)} \cdot Sen \cdot LvalN + 1_{(i)} \right).$$

En reprenant l'exemple précédent, on obtient :

$Prst_{(0)}$ = 0 ;
$Prst_{(1)}$ = 180 ;
$Prst_{(2)}$ = 200 ; et
$Prst_{(3)}$ = 487.

Les niveaux sont convertis en tension $V_{RST}$ de réinitialisation des cellules (figure 2).

Une septième séquence 518 applique les couples (intervalle de temps entre les réinitialisations ; niveau de cellules de réinitialisation) à toutes les cellules du capteur pour la prise de l'image N+1, avant de retourner à la séquence de préparation de l'image N+2.

Un avantage du mode de réalisation décrit est qu'il évite la saturation lumineuse des cellules en calculant, à partir de l'image courante, les couples de réinitialisation (intervalle de temps ; niveau de cellules) à appliquer à l'image suivante.

Un autre avantage du mode de réalisation décrit est qu'il optimise l'utilisation de l'intégralité de l'excursion lumineuse du capteur.

Bien entendu, la présente invention est susceptible de diverses variantes et modifications qui apparaîtront à l'homme de l'art, en particulier l'adaptation des valeurs calculées en niveaux de tension adaptées aux cellules est à la portée de l'homme du métier. De plus, la mise en oeuvre pratique des modes de réalisation décrits est à la portée de l'homme du métier à partir des indications fonctionnelles données ci-dessus.

## Revendications

1. Procédé de commande d'un capteur dynamique d'image comprenant des cellules à photodiode (PD) fournissant chacune une information représentative d'un niveau de luminosité, comportant, pour chaque image prise par ledit capteur, les étapes de :

   définir des plages de niveau de luminosité ;
   définir plusieurs intervalles de temps successifs d'exposition des cellules pour l'image suivante, les cellules étant réinitialisées au début de chaque intervalle, lesdits intervalles étant calculés à partir des niveaux de luminosité de l'image courante et de la répartition souhaitée des niveaux de luminosité pour l'image suivante ; et
   adapter les intervalles de temps d'exposition en fonction d'une distribution homogène du nombre de cellules (Q) dans les plages de niveaux de luminosité, **caractérisé en ce que** les intervalles de temps T(i) entre les réinitialisations pour l'image suivante sont calculés à l'aide de la formule :

$$T_{(i)} = \frac{PvalN + 1_{(i)} - PvalN + 1_{(i-1)}}{Sen \cdot \left( LvalN + 1_{(i)} - LvalN + 1_{(i-1)} \right)},$$

   où
   PvalN+1(i) désigne le seuil supérieur de l'intervalle i pour l'image suivante ;
   PvalN+1(i-1) désigne le seuil supérieur de l'intervalle i-1 pour l'image suivante ;
   LvalN+1(i) désigne la valeur de luminosité de l'intervalle i pour l'image suivante ;
   LvalN+1(i-1) désigne la valeur de luminosité de l'intervalle i-1 pour l'image suivante ; et

Sen désigne la sensibilité d'une cellule,

les niveaux de réinitialisation des cellules étant calculés à partir des seuils supérieurs des intervalles de luminosité, des intervalles de temps, des valeurs de luminosité, et de la sensibilité d'une cellule.

**2.** Procédé selon la revendication 1, dans lequel les intervalles de temps d'exposition d'une image courante (N) sont utilisés pour déterminer ceux d'une image suivante (N+1).

**3.** Procédé selon l'une quelconque des revendications 1 et 2, dans laquelle les niveaux Prst(i) des réinitialisations successives pour l'image suivante sont calculés à l'aide de la formule :

$$\text{Prst}_{(i)} = \text{PvalN} + 1_{(i)} - \left( T_{(i)} \cdot \text{Sen} \cdot \text{LvalN} + 1_{(i)} \right) \, ,$$

où

T(i) désigne l'intervalle de temps d'exposition de rang i entre les réinitialisations pour l'image courante.

**4.** Procédé selon l'une quelconque des revendications 1 à 3, comprenant en outre une étape de vérification que les niveaux de réinitialisation successifs sont décroissants.

**5.** Procédé selon l'une quelconque des revendications 1 à 4, dans lequel une valeur maximum de luminosité des cellules de l'image courante est, de manière optionnelle, comparée à un seuil et ajustée, pour l'image suivante, pour assurer la répartition des cellules sur toute la plage de valeurs disponibles.

**6.** Circuit de commande d'un capteur dynamique d'image comprenant des cellules à photodiode (PD) fournissant chacune une information représentative d'un niveau de luminosité, comportant, pour chaque image prise par ledit capteur, les moyens pour:

définir des plages de niveau de luminosité ;

définir plusieurs intervalles de temps successifs d'exposition des cellules pour l'image suivante, les cellules étant réinitialisées au début de chaque intervalle, lesdits intervalles étant calculés à partir des niveaux de luminosité de l'image courante et de la répartition souhaitée des niveaux de luminosité pour l'image suivante ; et adapter les intervalles de temps d'exposition en fonction d'une distribution homogène du nombre de cellules (Q) dans les plages de niveaux de luminosité, **caractérisé en ce que** ledit circuit comprend en outre des moyens pour calculer les intervalles de temps T(i) entre les réinitialisations pour l'image suivante à l'aide de la formule :

$$T_{(i)} = \frac{\text{PvalN} + 1_{(i)} - \text{PvalN} + 1_{(i-1)}}{\text{Sen} \cdot \left( \text{LvalN} + 1_{(i)} - \text{LvalN} + 1_{(i-1)} \right)} \, ,$$

où

PvalN+1(i) désigne le seuil supérieur de l'intervalle i pour l'image suivante ;

PvalN+1(i-1) désigne le seuil supérieur de l'intervalle i-1 pour l'image suivante ;

LvalN+1(i) désigne la valeur de luminosité de l'intervalle i pour l'image suivante ;

LvalN+1(i-1) désigne la valeur de luminosité de l'intervalle i-1 pour l'image suivante ; et

Sen désigne la sensibilité d'une cellule, et pour calculer les niveaux de réinitialisation des cellules à partir des seuils supérieurs des intervalles de luminosité, des intervalles de temps, des valeurs de luminosité, et de la sensibilité d'une cellule.

**7.** Capteur d'image comportant un circuit selon la revendication 6.

**Claims**

**1.** A method for controlling a dynamic image sensor comprising photodiode cells (PD), each providing an information representative of a brightness level, comprising for each image the steps of:

defining ranges of brightness levels;
defining several successive time intervals of exposure of the cells for the next image, the cells being reset at the beginning of each interval, said intervals being calculated from the brightness levels of the current image and from the desired distribution of the brightness levels for the next image; and
adapting the time intervals of exposure as a function of a homogeneous distribution of the number (Q) of cells in the ranges of brightness levels, **characterized in that** the time intervals T(i) between resets for the next image are calculated by the following formula:

$$T_{(i)} = \frac{PvalN + 1_{(i)} - PvalN + 1_{(i-1)}}{Sen \cdot \left( LvalN + 1_{(i)} - LvalN + 1_{(i-1)} \right)},$$

where
PvalN+1(i) designates the upper threshold of interval i for the next image;
PvalN+1(i-1) designates the upper threshold of interval i-1 for the next image;
LvalN+1(i) designates the brightness value of interval i for the next image;
LvalN+1(i-1) designates the brightness value of interval i-1 for the next image; and
Sen designates the sensitivity of a cell,
the cell reset levels being calculated from the upper thresholds of the brightness intervals, the time intervals, the brightness values, and the sensitivity of a cell.

2. The method of claim 1, wherein the time intervals of exposure of a current image (N) are used to determine those of a next image (N+1).

3. The method of claim 1 or 2, wherein the levels Prst(i) of the successive resets for the next image are calculated by formula:

$$Prst_{(i)} = PvalN + 1_{(i)} - \left( T_{(i)} \cdot Sen \cdot LvalN + 1_{(i)} \right),$$

where
T(i) designates the exposure time interval of rank i between resets for the current image.

4. The method of any of claims 1 to 3, further comprising a step of verification that the successive reset levels are decreasing.

5. The method of any of claims 1 to 4, wherein a maximum brightness value of the cells of the current image is, optionally, compared with a threshold and adjusted, for the next image, to provide the cell distribution over the entire range of available values.

6. A circuit for controlling a dynamic image sensor comprising photodiode cells (PD), each providing an information representative of a brightness level, means for:

defining ranges of brightness levels;
defining several successive time intervals of exposure of the cells, the cells being reset at the beginning of each interval, said intervals being calculated from the brightness levels of the current image and from the desired distribution of the brightness levels for the next image; and
adapting the time intervals of exposure as a function of a homogeneous distribution of the number (Q) of cells in the ranges of brightness levels, **characterized in that** said circuit further comprises means for calculating the time intervals T(i) between resets for the next image by the following formula:

$$T_{(i)} = \frac{PvalN + 1_{(i)} - PvalN + 1_{(i-1)}}{Sen \cdot \left( LvalN + 1_{(i)} - LvalN + 1_{(i-1)} \right)},$$

where
PvalN+1(i) designates the upper threshold of interval i for the next image;
PvalN+1(i-1) designates the upper threshold of interval i-1 for the next image;
LvalN+1(i) designates the brightness value of interval i for the next image;
LvalN+1(i-1) designates the brightness value of interval i-1 for the next image; and
Sen designates the sensitivity of a cell, and for calculating cell reset levels from the upper thresholds of the brightness intervals, the time intervals, the brightness values, and the sensitivity of a cell.

**7.** An image sensor comprising the circuit of claim 6.


**Patentansprüche**

**1.** Ein Verfahren zur Steuerung eines dynamischen Bildsensors der Photodiodenzellen (PD) aufweist, deren jede eine Information repräsentativ für ein Helligkeitsniveau liefert, wobei für jedes Bild die folgenden Schritte vorgesehen sind:

Definieren von Bereichen der Helligkeitsniveaus;
Definieren mehrerer aufeinanderfolgender Zeitintervalle der Belichtung der Zellen für das nächste Bild, wobei die Zellen zu Beginn jedes Intervalls zurückgesetzt werden, wobei die genannten Intervalle berechnet werden ausgehend von dem Beleuchtungsniveau des laufenden Bildes und von der erwünschten Verteilung der Helligkeitsniveaus für das nächste Bild; und
Adaptieren der Zeitintervalle der Beleuchtung als eine Funktion einer homogenen Verteilung der Anzahl der Zellen (Q) in den Bereichen der Helligkeitsniveaus,
**dadurch gekennzeichnet, dass** die Zeitintervalle T(i) zwischen Rücksetzungen für das nächste Bild nach der folgenden Formel berechnet werden:

$$T_{(i)} = \frac{PvalN + 1_{(i)} - PvalN + 1_{(i-1)}}{Sen \cdot \left( LvalN + 1_{(i)} - LvalN + 1_{(i-1)} \right)} \, ,$$

wobei

PvalN+1(i) die obere Schwelle des Intervalls i für das nächste Bild bedeutet;
PvalN+1(i-1) die obere Schwelle des Intervalls i-1 für das nächste Bild bezeichnet;
LvalN+1(i) den Helligkeitswert des Intervalls i für das nächste Bild bezeichnet;
LvalN+1(i-1) den Helligkeitswert des Intervalls i-1 für das nächste Bild bezeichnet; und
Sen die Empfindlichkeit einer Zelle bezeichnet,

wobei die Zellenrücksetzniveaus aus den oberen Schwellen der Helligkeitsintervalle, der Zeitintervalle, der Helligkeitswerte und der Empfindlichkeit einer Zelle berechnet werden.

**2.** Verfahren nach Anspruch 1, wobei die Belichtungszeitintervalle eines laufenden Bildes (N) zur Bestimmung derjenigen eines nächsten Bildes (N+1) verwendet werden.

**3.** Verfahren nach Anspruch 1 oder 2, wobei die Niveaus Prst(i) der aufeinander folgenden Rücksetzungen für das nächste Bild durch die folgende Formel berechnet werden:

$$Prst_{(i)} = PvalN + 1_{(i)} - \left( T_{(i)} \cdot Sen \cdot LvalN + 1_{(i)} \right) \, ,$$

dabei bezeichnet T(i) das Belichtungszeitintervall des Rangs i zwischen Rücksetzungen für das laufende Bild.

4. Verfahren nach einem der Ansprüche 1 - 3, wobei ferner ein Schritt der Verifikation vorgesehen ist, dass die aufeinander folgenden Rücksetzniveaus abnehmen.

5. Verfahren nach einem der Ansprüche 1 - 4, wobei ein maximaler Helligkeitswert der Zellen des laufenden Bildes wahlweise verglichen wird mit einer Schwelle und eingestellt wird für das nächste Bild, um die Zellenverteilung über den gesamten Bereich verfügbarer Werte vorzusehen.

6. Eine Schaltung zur Steuerung eines dynamischen Bildsensors der Photodiodenzellen (PD) aufweist, wobei jede eine Information repräsentativ für ein Helligkeitsniveau vorsieht,
Mittel um:

   Helligkeitsniveaubereiche zu definieren;
   mehrere aufeinander folgende Zeitintervalle der Belichtung der Zellen zu definieren, wobei die Zellen zu Beginn jedes Intervalls zurück gesetzt werden und die Intervalle aus den Helligkeitsniveaus des laufenden Bildes berechnet werden und aus der erwünschten Verteilung der Helligkeitsniveaus für das nächste Bild; und
   Adaptieren der Zeitintervalle der Belichtung aus einer Funktion einer homogenen Verteilung der Anzahl der Zellen (Q) in Bereichen der Helligkeitsniveaus,

   **dadurch gekennzeichnet, dass** die Schaltung ferner Mittel aufweist zur Berechnung der Zeitintervalle T(i) zwischen Rücksetzungen für das nächste Bild und zwar durch die folgende Formel:

$$T_{(i)} = \frac{\mathrm{PvalN} + 1_{(i)} - \mathrm{PvalN} + 1_{(i-1)}}{\mathrm{Sen} \cdot \left( \mathrm{LvalN} + 1_{(i)} - \mathrm{LvalN} + 1_{(i-1)} \right)} \ ,$$

   dabei bezeichnet

   PvalN+1 (i) die obere Schwelle des Intervalls i für das nächste Bild;
   PvalN+1(i-1) die obere Schwelle des Intervalls i-1 für das nächste Bild;
   LvalN+1(i) den Helligkeitswert des Intervalls i für das nächste Bild;
   LvalN+1(i-1) den Helligkeitswert des Intervalls i-1 für das nächste Bild; und
   Sen bezeichnet die Empfindlichkeit einer Zelle wobei die Zellenrücksetzniveaus aus den oberen Schwellen der Helligkeitsintervalle, der Zeitintervalle, der Helligkeitswerte und der Empfindlichkeit einer Zelle berechnet werden.

7. Ein Bildsensor, der die Schaltung des Anspruchs 6 aufweist.

Fig 1

Fig 2

Fig 3

Valeurs
des cellules

Pval N+1(4),PvalN(4)  1000

Pval N(3)  900

Pval N+1(3)

700

Pval N(2)
Pval N+1(2)

Pval N(1)  500

Pval N+1(1)

300

Pval N+1(0)

Pval N(0)  100

$40_5$

$40_4$

$40_3$

$40_2$

**42**

**42**

**42**

**42**

**42**

**42**

$40_1$

20%    40%    60%    80%    100%    % des cellules

Fig 4

EP 2 357 798 B1

14

502

```
┌──────────────────────────────────────────────────────────────────┐
│                          Préparation                               │
└──────────────────────────────────────────────────────────────────┘
```

504

```
┌──────────────────────────────────────────────────────────────────┐
│        Calcul des valeurs de luminosité correspondant aux          │
│    bornes de la répartition des valeurs de cellule de l'image N     │
└──────────────────────────────────────────────────────────────────┘
```

506

```
┌──────────────────────────────────────────────────────────────────┐
│    Construction des couples  (seuils de valeurs de cellule; luminosité) │
│                        pour l'image N+1                             │
└──────────────────────────────────────────────────────────────────┘
```

510

```
┌──────────────────────────────────────────────────────────────────┐
│      Ajustement optionnel de la valeur de luminosité maximale       │
└──────────────────────────────────────────────────────────────────┘
```

516

```
┌──────────────────────────────────────────────────────────────────┐
│    Vérification de l'absence d'incohérence parmi les couples        │
│      (valeurs de cellule; luminosité) avant application             │
└──────────────────────────────────────────────────────────────────┘
```

508

Egalité des couples — Y

N

512

```
┌──────────────────────────────────────────────────────────────────┐
│    Définition des intervalles de temps entre les réinitialisations  │
│                        pour l'image N+1                             │
└──────────────────────────────────────────────────────────────────┘
```

514

```
┌──────────────────────────────────────────────────────────────────┐
│        Définition des niveaux de cellule de réinitialisation        │
│                        pour l'image N+1                             │
└──────────────────────────────────────────────────────────────────┘
```

518

```
┌──────────────────────────────────────────────────────────────────┐
│    Application des couples de réinitialisation (intervalle de       │
│      temps, niveau de cellule) pour l'image N+1                     │
└──────────────────────────────────────────────────────────────────┘
```

Fig 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6600471 A
- US 6348681 A
- EP 1971137 A
- WO 2007074659 A
- FR 2915652 A
- WO 2004064386 A